(19) Europäisches Patentamt
European Patent Office
Office européen des brevets

(11) Veröffentlichungsnummer: **0 247 246 B1**

(12) **EUROPÄISCHE PATENTSCHRIFT**

(45) Veröffentlichungstag der Patentschrift: **23.10.91**

(51) Int. Cl.⁵: **G02B 6/44**

(21) Anmeldenummer: **86200906.5**

(22) Anmeldetag: **23.05.86**

(54) **Verfahren zur Herstellung eines optischen Kabels.**

(30) Priorität: **30.05.85 DE 3519358**

(43) Veröffentlichungstag der Anmeldung:
**02.12.87 Patentblatt 87/49**

(45) Bekanntmachung des Hinweises auf die Patenterteilung:
**23.10.91 Patentblatt 91/43**

(84) Benannte Vertragsstaaten:
**AT CH DE FR GB IT LI**

(56) Entgegenhaltungen:
**DE-A- 2 519 050**
**GB-A- 2 106 266**
**US-A- 4 446 686**

(73) Patentinhaber: **Philips Patentverwaltung GmbH**
**Wendenstrasse 35 Postfach 10 51 49**
**W-2000 Hamburg 1(DE)**

(84) Benannte Vertragsstaaten:
**DE**

Patentinhaber: **N.V. Philips' Gloeilampenfabrieken**
**Groenewoudseweg 1**
**NL-5621 BA Eindhoven(NL)**

(84) Benannte Vertragsstaaten:
**CH FR GB IT LI AT**

(72) Erfinder: **Ditscheid, Hans-Leo**
**Am Birkenbusch 1**
**NL-5060 Bergisch-Gladbach 2(NL)**

(74) Vertreter: **Koch, Ingo, Dr.-Ing. et al**
**Philips Patentverwaltung GmbH Wendenstrasse 35 Postfach 10 51 49**
**W-2000 Hamburg 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung bezieht sich auf ein Verfahren zur Herstellung eines optischen Kabels, welches aus einer mindestens ein Zugentlastungselement enthaltende Seele sowie aus einem die Seele gleitfähig umhüllenden Mantel besteht, wobei nach der Extrusion des Mantels und seiner Abkühlung das Kabel durch zwei hintereinander liegende Fördereinrichtungen unterschiedlicher Einzugsgeschwindigkeit geführt wird, wobei die erste Fördereinrichtung an der Außenfläche des Mantels angreift und eine axiale Kraft auf den Mantel ausübt, und wobei die zweite Fördereinrichtung Mantel und Seele synchron fördert.

Bei einem in der DE-OS 32 34 392 beschriebenen Verfahren wird auf die Umhüllung mittels eines Zug-Kapstans eine longitudinale Spannung aufgebracht. Dadurch soll verhindert werden, daß bei der Herstellung des Kabels infolge der Kontraktion der Umhüllung Druckspannungen auf die Kabelseele ausgeübt werden. Kontraktionen entstehen vornehmlich bei der Abkühlung des Mantels, aber auch durch eine Orientierung und Verstreckung des Materials bei der Extrusion. Durch eine Rekkung des extrudierten Materials der Umhüllung sollen dessen Eigenschaften derart verändert werden, daß nachfolgend nur noch geringe Kontraktionen entstehen. Dazu werden speziell geeignete Werkstoffe wie z.B. PVC benötigt.

Ein Verfahren der eingangs genannten Art ist in der US-PS 4 446 686 beschrieben. Dort wird ein Lichtwellenleiter umgebender Mantel zunächst gegenüber den Lichtwellenleitern gedehnt, so daß sich nach dem Entspannen eine Überlänge der Lichtwellenleiter gegenüber dem Mantel einstellt.

Demgegenüber liegt der Erfindung die Aufgabe zugrunde, ein Verfahren der eingangs genannten Art derart zu gestalten, daß die schädlichen Auswirkungen von Kontraktionen bei Verwendung eines beliebigen Materials für den Mantel von der Kabelseele ferngehalten werden. Die Lösung gelingt dadurch, daß daß die Einzugsgeschwindigkeit der ersten Fördereinrichtung größer ist als die Einzugsgeschwindigkeit der nachfolgenden Fördereinheit, und daß dabei die erste Fördereinrichtung in Richtung der nachfolgenden Fördereinrichtung eine Schubkraft auf den Mantel ausübt, die den Mantel derart über die Seele schiebt, daß sich im Bereich zwischen den beiden Fördereinrichtungen ein Kabel mit einem bezüglich der Seele gestauchtem Mantel einstellt.

Erfindungsgemäß wird der Mantel mit Überlänge gegenüber der Seele hergestellt. Diese Überlänge verteilt sich gleichmäßig auf die Kabellänge in Form elastischer und/oder plastischer Stauchungen und ist insbesondere mindestens so groß, wie die zu erwartende Kürzung des Mantels infolge der Kontraktion zu wählen. Die gegebenenfalls im Mantel verbleibenden inneren Längskräfte werden von den Zugentlastungselementen der Seele aufgefangen. Bei einem erfindungsgemäß hergestellten Kabel werden mit Sicherheit keine Stauchkräfte auf die Kabelseele und die darin enthaltenden LWL übertragen, ohne daß stauchfeste Zugentlastungselemente verwendet werden müssen. Eine Überkompensation der Kontraktionskräfte ist unschädlich, da Zugentlastungselemente wie Kevlar-rovings zwar nicht stauchfest, aber in hohem Maße zugfest sind.

Die Erfindung und deren Vorteile werden im folgenden anhand der Zeichnung näher erläutert.

Fig. 1    zeigt einen Querschnitt durch ein erfindungsgemäß hergestelltes optisches Kabel.

Fig. 2    zeigt schematisch eine Einrichtung zur Herstellung eines solchen Kabels.

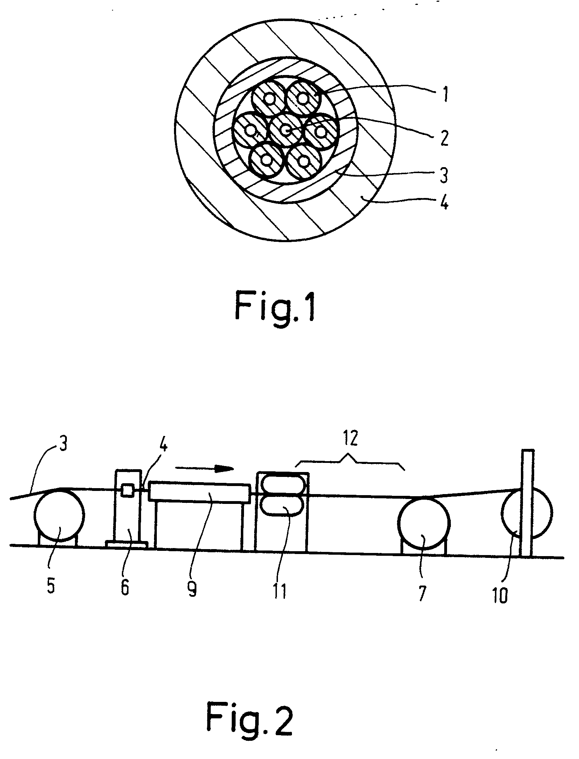

Das als Beispiel gewählte Kabel enthält gemäß Figur 1 sechs LWL 1, die um ein zentrales Zugelement 2 verseilt sind. Um diese ist mit langem Schlag eine Hülle 3 verseilt, welche aus Kevlar-Rovings oder Glasfasern besteht.

Diese Hülle vermag keine axialen Stauchkräfte aufzunehmen, sondern nur Zugkräfte. Um die zugfeste Hülle 3 ist der Mantel 4 extrudiert.

Aus wirtschaftlichen Gründen werden LWL mit möglichst großer Schlaglänge verseilt, was zur Folge hat, daß der Verseilverbund keine nennenswerte axiale Verkürzung ohne wellenartige Verformen der LWL aufnehmen kann. Werden bei einer Ausführung nach Figur 1 die LWL 1 bei einem Durchmesser von 0,9 mm mit einer Schlaglänge von 70 mm um das zentrale Element 2 verseilt, so wird gegenüber der gestreckten Lage eine Mehrlänge von 3,2 %, benötigt. Würde dieser Verseilverbund beispielsweise um 3 % infolge Kontraktion des Schutzmantels verkürzt, müßte sich sein Außendurchmesser von 2,7 mm auf 6,6 mm vergrößern. Da aber der Mantel 4 die Verseilelemente 1 und 2 sowie die zugfeste Hülle 3 eng umschließt, so daß eine Durchmesservergrößerung nicht möglich ist, müßten sich die LWL und die Elemente der zugfesten Hülle 3 wellenförmig ausformen. Dann bestünde aber die Gefahr, daß die minimal zulässigen Biegeradien der LWL unterschritten oder durch Microbending höhere Dämpfungen verursacht würden.

Die Kontraktion des Mantels 4 infolge der vom E-Modul und der Querschnittsfläche abhängigen Kraft kann je nach Höhe der Reibung zwischen Kabelseele und Mantel 4 zu so großen Stauchkräften führen, daß sogar ein in der Achse der Kabelseele angeordnetes GFK-Zugelement durch Stauchung zerstört wird. Bei einem thermischen Ausdehnungskoeffizient (der üblichen Kunststoffe) von etwa $2 \times 10^{-4} \text{K}^{-1}$ und einer Temperaturdifferenz

zwischen Schmelzpunkt und Raumtemperatur von 100 bis > 200 ° C (der üblichen Kunststoffe) ergeben sich Kontraktionen zwischen 2 und 5 %, welche noch durch Orientierung oder Verstrecken des Materials vergrößert werden können.

Wenn der Mantel 4 auf der zugfesten Hülle 3 mechanisch fixiert ist, beispielsweise durch Klebung, Verschweißung oder Verhaken, müssen spätere Verkürzungen des Mantels 4 infolge einer bei Biegung und Temperaturwechsel entstehenden Kontaktion zur Stauchung der Kabelseele führen.

Eine wesentliche Voraussetzung für die Anwendbarkeit des erfindungsgemäßen Verfahrens ist, daß der Mantel 4 und die zugfeste Hülle 3 gegeneinander gleitfähig sind. Das erfindungsgemäße Verfahren kann mit einer in Figur 2 angedeuteten Fertigungsanlage ausgeübt werden.

Auf die mittels der Abzugsscheibe 7 über die Bremsscheibe 5 durch den Extruder 6 in Pfeilrichtung gezogene Kabelseele 8 wird der Mantel 4 extrudiert und in der Kühlrinne 9 gekühlt. Die Abzugsscheibe 7 wird vom Kabel umschlungen und stellt somit einen Kraftschluß zwischen Mantel 4 und Seele 8 her. Danach wird das Kabel von dem Aufwickler 10 aufgewickelt.

Die Schubraupe 11 greift kraft- und/oder auch formschlüssig außen am Mantel 4 an und schiebt diesen über die Seele 8 stauchend in Richtung auf die Abzusscheibe 7, wo die Schubbewegung zwischen Seele 8 und Mantel 4 durch gegenseitigen Kraftschluß zum Stillstand kommt. Es ist einleuchtend, daß der Mantel 4 nur dann von der Schubraupe 11 über die Seele 8 geschoben werden kann, wenn dort keine kraftschlüssige gegenseitige Verklemmung infolge zu hoher radialer Andruckkräfte der Schubraupe entsteht. Damit dennoch die erforderlichen axialen Mitnahmekräfte übertragen werden können, ist der Reibungskoeffizient zwischen Schubraupe 11 und Mantel 4 möglichst groß zu wählen. Erforderlichenfalls kann die angreifende Oberfläche der Schubraupe 11 profiliert werden, um eine formschlüssige Mitnahme zu bewirken.

Die stauchende axiale Komprimierung des Mantels 4 erfolgt im wesentlichen im Bereich 12 zwischen Schubraupe 11 und Abzugsscheibe 7.

Statt einer Abzugsscheibe 7 könnte auch eine Abzugsraupe verwendet werden, wobei diese aber im Gegensatz zur Schubraupe 11 eine höhere radiale Kraft auf das Kabel ausüben müßte, so daß eine reibschlüssige Blockierung der Schubbewegung zwischen Hülle 4 und Seele 8 erreicht wird.

**Patentansprüche**

1. Verfahren zur Herstellung eines optischen Kabels (3), welches aus einer mindestens einen Lichtwellenleiter (1) und mindestens ein Zugentlastungselement (2) enthaltende Seele (8) sowie aus einem die Seele (8) gleitfähig umhüllenden Mantel (4) besteht, wobei nach der Extrusion des Mantels (4) und seiner Abkühlung das Kabel (3) durch zwei hintereinander liegende Fördereinrichtungen (11,7) unterschiedlicher Einzugsgeschwindigkeit geführt wird, wobei die erste (11) Fördereinrichtung an der Außenfläche des Mantels (4) angreift und eine axiale Kraft auf den Mantel ausübt, und wobei die zweite Fördereinrichtung (7) Mantel (4) und Seele (8) synchron fördert, dadurch gekennzeichnet, daß die Einzugsgeschwindigkeit der ersten Fördereinrichtung (11) größer ist als die Einzugsgeschwindigkeit der nachfolgenden Fördereinheit (7), und daß dabei die erste Fördereinrichtung (11) in Richtung der nachfolgenden Fördereinrichtung (7) eine Schubkraft auf den Mantel (4) ausübt, die den Mantel derart über die Seele schiebt, daß sich im Bereich zwischen den beiden Fördereinrichtungen ein Kabel mit einem bezüglich der Seele gestauchtem Mantel einstellt.

2. Verfahren nach Anspruch 1, dadurch gekennzeichnet, daß die Seele (8) vor dem Aufbringen des Mantels (4) mit einer zugfesten Hülle (3) umgeben wird.

3. Verfahren nach Anspruch 1 oder 2, dadurch gekennzeichnet, daß als zweite Fördereinrichtung eine Abzugsscheibe (7) verwendet wird.

4. Verfahren nach Anspruch 1 oder 2, dadurch gekennzeichnet, daß als erste Fördereinrichtung eine Abzugsraupe (11) verwendet wird.

**Claims**

1. A method of manufacturing an optical cable (3) which comprises a core (8) having at least one optical waveguide (1) and at least one strain-relief element (2) as well as a sheath (4) which slidably surrounds said core (8), after the extrusion and the cooling of the sheath (4), the cable (3) being transported by two conveying devices (7,11) which are located behind each other and which have different feed rates, the first conveying device (11) engaging the outer surface of the sheath (4) and subjecting the sheath to an axial force, and the second conveying device (7) synchronously conveying the core (8) and the sheath (4), characterized in that the feed rate of the first conveying device (11) is higher than that of the next conveying device (7), and in that the first conveying device (11) exerts a shearing force on the sheath (4) in the direction of the next conveying device (7), thereby causing the sheath to slide over the core in such a way that in the area between both conveying devices a cable is obtained having a sheath which is buckled relative to the core.

2. A method as claimed in Claim 1, characterized in that a tension-proof jacket (3) is arranged around the core (8) before the sheath (4) is provided.

3. A method as claimed in Claim 1 or 2, characterized in that a pull-off capstan (7) is used as the second conveying device.

4. A method as claimed in Claim 1 or 2, characterized in that a transport means (11) is used as the first conveying device.

**Revendications**

1. Procédé pour la fabrication d'un câble optique (3) constitué par au moins un guide d'ondes lumineuses (1) et par au moins une âme (8) contenant un élément de décharge de traction (2) ainsi que par une gaine (4) enveloppant de façon à pouvoir glisser ladite âme (8), selon lequel, après l'extrusion de la gaine (4) et son refroidissement, le câble (3) est guidé à travers deux dispositifs de transport successifs (11,7) à vitesses d'introduction différentes, le premier dispositif de transport (11) agissant sur la face extérieure de la gaine (4) et exerçant une force axiale sur la gaine et le deuxième dispositif de transport (7) assurant le transport synchrone de la gaine (4) et de l'âme (8), caractérisé en ce que la vitesse d'introduction du premier dispositif de transport (11) est supérieure à la vitesse d'introduction de l'unité de transport suivante (7) et que le premier dispositif de transport (11) exerce une force de cisaillement sur la gaine (4) dans la direction du dispositif de transport suivant (7), laquelle force de cisaillement déplace la gaine sur l'âme de façon que dans la zone située entre les deux dispositifs de transport il s'établisse un câble présentant une gaine qui est refoulée par rapport à l'âme.

2. Procédé selon la revendication 1, caractérisé en ce qu'avant l'application de la gaine (4), l'âme (8) est entourée d'une enveloppe résistant à la traction (3).

3. Procédé selon la revendication 1 ou 2, caractérisé en ce qu'une roue de tirage (7) est utilisée comme deuxième dispositif de transport.

4. Procédé selon la revendication 1 ou 2, caractérisé en ce qu'une chaîne de tirage (11) est utilisée comme premier dispositif de transport.

Fig.1

Fig.2